# EUROPÄISCHE PATENTSCHRIFT

(11) **EP 3 328 763 B1**
(45) Veröffentlichungstag und Bekanntmachung des Hinweises auf die Patenterteilung: **07.09.2022**
(21) Anmeldenummer: 16744348.0
(22) Anmeldetag: 21.07.2016
(51) Int. Cl.: B65G 47/51

(54) **ENTLADEVORRICHTUNG FÜR GONDELKETTEZWISCHENSPEICHER**
UNLOADING MECHANISM FOR TEMPORARY GONDOLA-TYPE STORING DEVICES ON A CHAIN CONVEYOR
DISPOSITIF DE DÉCHARGEMENT POUR SYSTÈME DE STOCKAGE INTERMÉDIAIRE À CHAÎNES ET NACELLES

(30) Priorität: 31.07.2015 CH 11142015
(43) Veröffentlichungstag der Anmeldung: 06.06.2018
(73) Patentinhaber: Rotzinger AG, 4303 Kaiseraugst (CH)
(72) Erfinder: PHILIPP, Kurt, 79639 Grenzach-Wyhlen (DE)
(74) Vertreter: Braun, André jr.
(86) Internationale Anmeldenummer: PCT/EP2016/067383
(87) Internationale Veröffentlichungsnummer: WO 2017/021160

(56) Entgegenhaltungen:
- EP-A1- 1 586 520
- EP-A1- 1 818 292
- US-A1- 2003 223 845

## Beschreibung

Die Erfindung betrifft eine Entladevorrichtung gemäss dem Oberbegriff des Anspruchs 1.

Entladevorrichtungen dieser Art werden benötigt, um Stückgüter, die als Produktreihen in sog. Produkteträgergondeln eines Produktespeichers zwischengepuffert werden, aus dem Speicher auf Auslaufbänder zu bringen. Diese Produkteträgergondeln bestehen zumeist aus vier oder sechs oder auch bis zu 24 Produkteträgertablaren, worauf die Produktreihen am Einlauf des Zwischenpuffers mit einer bestimmten Fördergeschwindigkeit eingespeichert werden.

Im Allgemeinen handelt es sich um Zwischenspeicher, die nach dem First in First out Prinzip (FiFo) die Produktreihen handhaben. Dieses Funktionsprinzip kommt zumeist bei unverpackten Produkten zur Anwendung. Die Produkteträgergondeln sind an zwei paarweise angeordneten endlosen Kettensträngen drehbar aufgehängt. Der Abstand dieser Produkteträgergondeln auf der Kette richtet sich nach Länge und Höhe der Produkte. Ebenso hängt auch der Vertikalabstand der jeweiligen Produkteträgertablare innerhalb einer Produkteträgergondel von der Höhe des Produkts ab. Die umlaufend mit Produkteträgergondeln bestückte Kette eines Zwischenspeichers wird in dessen Einlauf mit einem Servomotor angetrieben der mit der Produktionsgeschwindigkeit synchronisiert ist, und am Auslauf ebenfalls mit einem Servomotor angetrieben, der mit der Verpackungsgeschwindigkeit synchronisiert ist.

Hierbei wird die Gondelkette am Einlauf des Zwischenspeicher üblicherweise vertikal nach oben bewegt und an dessen Auslauf vertikal nach unten. In Ausnahmefällen geht das jedoch auch umgekehrt. Am Einlauf dieser Zwischenspeicher gibt es aus dem Stand der Technik eine Vielzahl von technischen Lösungen, die es ermöglichen, die von der Produktion ankommenden Produktreihen mit grosser Geschwindigkeit einzuspeichern. Hierbei werden die Produktreihen berührungslos nur mit deren Geschwindigkeit auf die Produkteträgertablare beschickt, sodass die jeweilige Produktreihe auf das bereitgestellte Produkteträgertablar rutschen kann.

Am Auslauf des Zwischenspeichers muss die Taktzahl um ca. 20 % höher liegen als beim Einlauf. Die zumeist auslaufseitigen Störungen in der Verpackungslinie führen zu einer Erhöhung des Füllgrads des Zwischenspeichers. Damit diese Erhöhung des Füllgrads während der Produktion wieder abgebaut werden kann, muss der Auslauf des Zwischenspeichers in der Lage sein, eben um diese 20% schneller auszutakten.

Für das Austragen werden die Produktreihen mit einem Ausschieber von den Produkteträgertablaren auf das Auslaufband ausgeschoben. Der Ausschieber durchdringt dabei die Produkteträgergondel bis die Produktreihe mit ihrer Länge auf dem Auslaufband liegt. Danach wird die Ausschubleiste wieder um den gleichen Hub zurückgezogen. In dieser Zeit kann die Produkteträgergondel nicht bewegt werden. Erst nach dem vollständigen Rückhub kann das nächste Produkteträgertablar wieder durch einen Abwärtstakt der Kette des Zwischenspeichers bereitgestellt werden. Dieser Vorgang ist zeitintensiv und reduziert die Auslauf-Taktzahl erheblich EP 1 818 292 A1 offenbart eine Entladevorrichtung nach dem Oberbegriff des Anspruchs 1. .

Der Erfindung liegt die Aufgabe zugrunde, eine Möglichkeit zur Erhöhung der Auslauftaktzahl zu schaffen. Erfindungsgemäss wird dies erreicht durch eine Entladevorrichtung, die sich durch die kennzeichnenden Merkmale des Anspruchs 1 auszeichnet.

Im Folgenden wird anhand der beiliegenden Zeichnungen ein bevorzugtes Ausführungsbeispiel der Erfindung beschrieben. Es zeigen
- Fig. 1: eine schematische Gesamtansicht eines Zwischenspeichers in einer Produktionslinie mit Einlauf- und Auslaufband.
- Fig. 2: eine schematische Darstellung des Ablaufs der Entladung von gleichzeitig zwei Produkteträgertablaren
- Fig. 3: eine schematische Darstellung des Ablaufs der Entladung von gleichzeitig drei Produkteträgertablaren
- Fig. 4: eine schematische Darstellung einer alternativen Ausführungsform mit Auslaufbändern zu zwei Verpackungsstationen
- Fig. 5: eine schematische Darstellung einer alternativen Ausführungsform mit Auslaufbändern zu drei Verpackungsstationen
- Fig. 6: eine schematische Darstellung einer alternativen Ausführungsform mit Verteilung auf zwei Auslauflinien
- Fig. 7: eine schematische Darstellung einer alternativen Ausführungsform mit Verteilung auf drei Auslauflinien

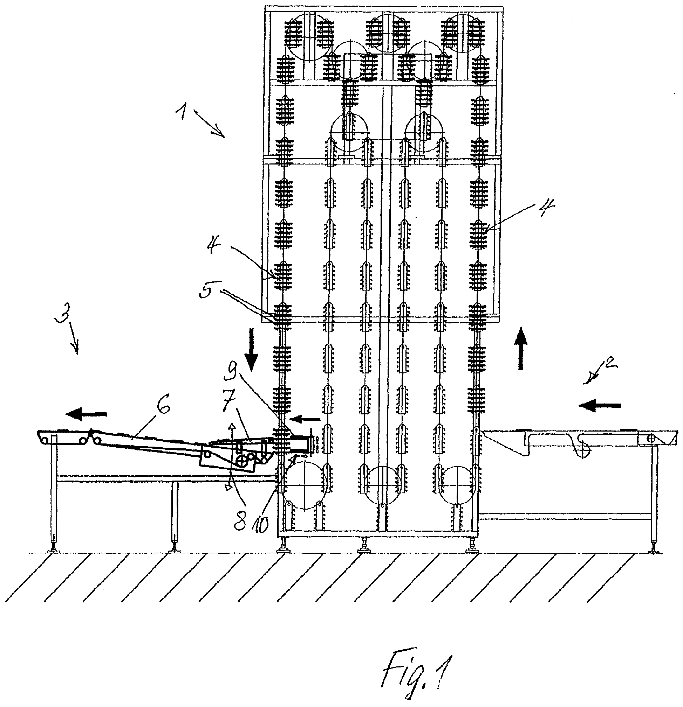

Die Grundaufstellung der Zwischenspeicherung, in welcher die erfindungsgemässe Entladevorrichtung zum Einsatz kommt, entspricht dem Stand der Technik mit frontalem Einlauf, der die von der Produktion herkommenden Produktreihen übernimmt, und ebenfalls frontalem Auslauf der Produktreihen in Richtung Verpackungsanlage übergibt. Die in Fig. 1 gezeigte Ausführungsform der Erfindung besitzt einen an sich bekannten Zwischenspeicher 1, der zwischen einem von der Produktion kommenden Einlaufband 2 und einem zu einer Verpackungsanlage führenden Auslaufband 3 angeordnet ist. Der Speicher ist mit an paarweise angeordneten Kettensträngen aufgehängten Produkteträgergondeln 4 mit je sechs Produkteträgertablaren 5 ausgestattet. Der Antrieb der Kettenstränge mit unterschiedlichen Geschwindigkeiten am Einlauf und am Auslauf entspricht ebenfalls dem eingangs geschilderten Stand der Technik. Wie eingangs erwähnt, können die Produkteträgergondeln auch weniger oder mehr Tablare enthalten.

Auf der Auslaufseite ist ein unteres Hauptband 6 angeordnet, mit dem ein darüber befindliches Zusatzband 7, stationär mechanisch verbunden ist. Das Hauptband ist länger und läuft mit höherer Geschwindigkeit als das Zusatzband. Das Hauptband 6 ist auslaufseitig drehbar angelenkt, sodass die beiden Bänder vertikal schwenkbar sind, wie durch den Doppelpfeil 8 angedeutet. Das Zusatzband verläuft über dem Hauptband schräg nach unten und endet über dem Hauptband in einem vertikalen Abstand, der das Durchlaufen der Produktreihen auf dem Hauptband 6 zulässt. Der vertikale Abstand der Übernahmekanten der beiden Bänder ist gleich gross wie der Abstand zwischen vier Tablaren einer Produkteträgergondel. Wenn sich also beispielsweise die Übernahmekante des Hauptbands auf der Höhe des untersten Tablars einer Gondel befindet, so befindet sich die Übernahmekante des Zusatzbands auf der Höhe des vierten Tablars derselben Gondel, so dass die Produktreihen von diesen Tablaren auf die Bänder geschoben werden können. Selbstverständlich kann je nach Bedarf auch ein anderer vertikaler Abstand vorgesehen werden, der sich auch über mehrere Gondeln erstrecken kann.

Auf der Höhe des Auslaufbands ist auf der dem Auslauf gegenüberliegenden Seite der Gondeln ein, mit zwei Ausschubleisten 9 versehener Ausschieber 10 angeordnet. Der Ausschieber besitzt einen servomotorischen Antrieb der eine horizontale Bewegung relativ zu den Gondeln bewirkt. Wenn sich der Ausschieber vorwärts, d.h. auf eine Gondel zu bewegt, werden die Produktreihen durch die Ausschubleisten von den auf ihrer Höhe befindlichen Tablaren in Flussrichtung auf die ebenfalls auf derselben Höhe befindlichen Bänder geschoben.

Der Ausschieber mit den beiden Ausschubleisten und die beiden nachgeschalteten Förderbänder sind gelenkig mechanisch so gekoppelt, dass jeweils ein Band und eine Ausschubleiste sich auf der Höhe desselben Tablars befinden. Die Gondeln 4 bewegen sich während des Produktaustrags kontinuierlich nach unten. Der Ausschieber wird vertikal über einen Servomotor synchron mit den Gondeln nach unten bewegt. Der Ausschub der Produktreihen kann also während der Abwärtsbewegung der Produkteträgergondeln erfolgen. Nach Beendigung des jeweiligen Doppelausschubs und dem Rückzug des Ausschiebers, bewegen sich der Ausschieber und auch die mechanisch gekoppelten beiden Auslaufbänder vertikal nach oben, entgegen den nach unten bewegten Produkteträgergondeln. Sobald der Aufwärtshub erfolgt ist, synchronisiert sich der Vertikalantrieb des Ausschiebers wieder auf die Abwärtsbewegung der Produkteträgergondeln auf, um dann den erneuten Ausschub zu starten. Die übereinander liegenden ausgeschobenen Reihen werden über eine bestimmte Geschwindigkeitsdifferenz der beiden nachgeschalteten Förderbänder in einen regelmässigen lückenlosen Produktfluss überführt. Hierbei hat das untere Hauptband die grössere Durchschnittsgeschwindigkeit, sodass immer die entsprechende Lücke zur Verfügung steht, damit die Produktreihen vom oberen Band im Fluss auf das untere Hauptband gefördert werden können.

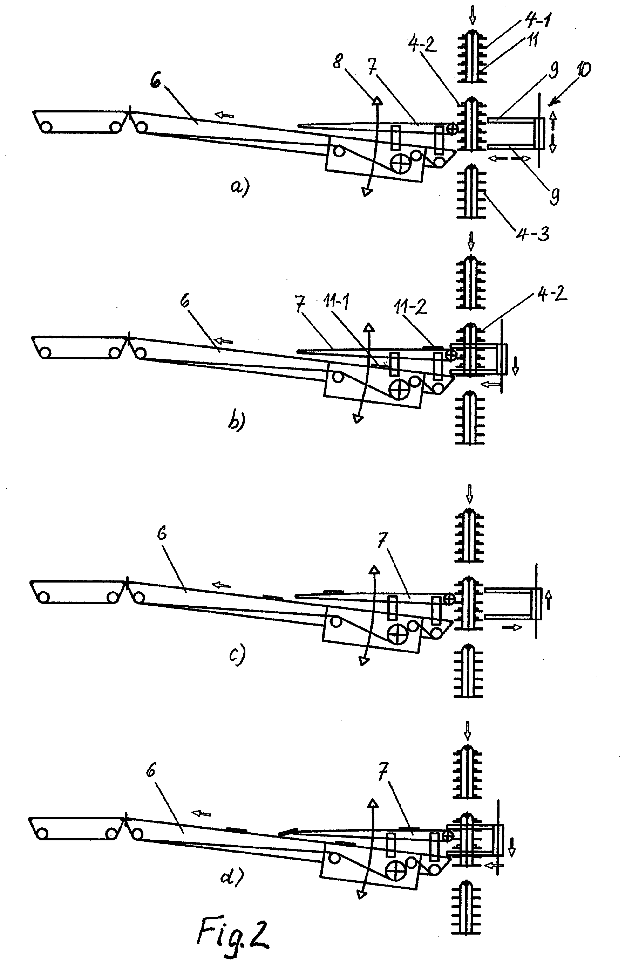

In Fig. 2 ist dieser Ablauf in mehreren Stadien verdeutlicht. Für jeden Schritt sind drei Gondeln gezeigt: Die oberste Gondel 4-1 ist noch mit Produktreihen 11 bestückt. Die mittlere Gondel 4-2 befindet sich gerade im Stadium des Produktaustrags. Die Tablare der unteren Gondel 4-3 sind bereits leer.

In Fig. 2a befinden sich das Hauptband und die untere Ausschubleiste einander gegenüber auf der Höhe des untersten Tablars einer Gondel. Gleichzeitig befinden sich das Zusatzband und die obere Ausschubleiste auf der Höhe des vierten Tablars. Der Ausschieber befindet sich noch in seiner zurückgezogenen Position, d.h. die Ausschubleisten befinden sich noch ausserhalb der Gondel und die Produkte liegen noch auf den Tablaren.

Fig. 2b zeigt den nächsten Schritt mit dem der Ausschieber vorwärts, d.h. auf die Gondel 4-2 zu bewegt wurde, so dass die jeweiligen Produktreihen auf die beiden Bänder geschoben wurden. Es ist ersichtlich, dass die Produktreihe 11-1 auf dem Hauptband infolge dessen grösserer Geschwindigkeit bereits weiter gefördert wurde als die Produktreihe 11-2 auf dem Zusatzband, sodass für letztere die erwähnte Lücke auf dem Hauptband besteht, wenn sie dort abgelegt wird.

Nach dem Ausschieben der Produktreihen wird der Ausschieber wieder zurückgezogen und zusammen mit den Bändern um einen vertikalen Tablarabstand nach oben versetzt. Dieser Zustand ist in Fig. 2c gezeigt. Dadurch kommen jetzt das zweite und fünfte Tablar von unten in die für den Austrag geeignete Position.

Fig. 2d zeigt entsprechend dem Schritt 2b den Austrag der jeweiligen Produktreihen. Mit einer weiteren gleichen Schrittfolge wird die Gondel geleert.

Bei diesem Ablauf müssen somit die Produkteträgergondeln während des Ausschubs der Produktreihen nicht mehr gestoppt werden, sondern können mit konstanter Geschwindigkeit nach unten bewegt werden. Durch den gleichzeitigen Ausschub von zwei Produktreihen ohne ein Stoppen der Produkteträgergondel kann die Taktzahl des Zwischenspeicher-Auslaufs drastisch erhöht werden. Die Anordnung ist derartig konstruiert, dass das unten liegende Hauptband länger ist als das oberhalb angeordnete Band. Das längere unten liegende Hauptband ist schwenkbar über einen auslaufseitigen Drehpunkt. Das oberhalb angeordnete kürzere Förderband ist auf dem unteren Hauptband stationär mechanisch befestigt und wird somit Huckepack mitbewegt.

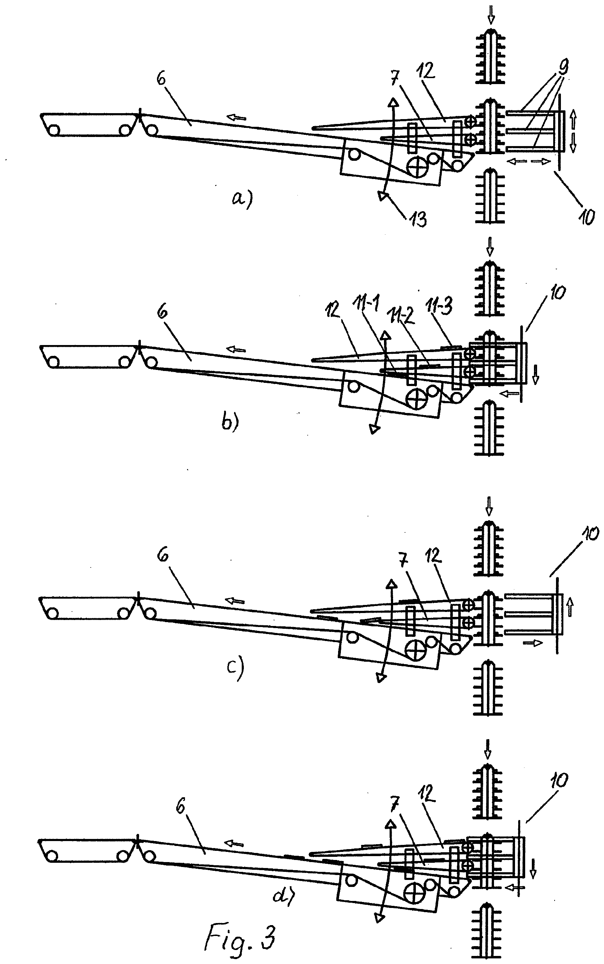

Bei der in Fig. 3 gezeigten Ausführungsform ist ein zweites Zusatzband 12 oberhalb des ersten Zusatzbands 7 angeordnet, das ebenfalls mechanisch am Hauptband 6 fixiert ist und sich somit mit diesem vertikal bewegt, wie durch den Pfeil 13 angedeutet. Das obere Zusatzband 12 ist länger als das untere Zusatzband 7 und läuft mit einer berechenbaren anderen Geschwindigkeit als das letztere. Der Ausschieber 10 ist mit drei Ausschubleisten 9 bestückt.

Der Ablauf der Entladung erfolgt entsprechend dem in Fig. 2 gezeigten:
In Fig. 3a befinden sich das Hauptband und die untere Ausschubleiste einander gegenüber auf der Höhe des untersten Tablars einer Gondel 4-2. Gleichzeitig befinden sich das untere Zusatzband 7 und die mittlere Ausschubleiste auf der Höhe des dritten Tablars, sowie das obere Zusatzband 12 und die obere Ausschubleiste auf der Höhe des fünften Tablars von unten. Der Ausschieber befindet sich noch in seiner zurückgezogenen Position.

Fig. 3b zeigt den nächsten Schritt mit dem der Ausschieber die jeweiligen Produktreihen auf die drei Bänder geschoben hat. Es ist ersichtlich, dass die Produktreihe 11-1 auf dem Hauptband infolge dessen grösserer Geschwindigkeit bereits weiter gefördert wurde als die Produktreihe 11-2 auf dem Zusatzband und dass die Produktreihe 11-3 infolge der niedrigeren Geschwindigkeit des oberen Zusatzbands wiederum auf eine entsprechende Lücke auf dem Hauptband trifft, wenn sie dort abgelegt wird.

Nach dem Ausschieben der Produktreihen wird der Ausschieber wieder zurückgezogen und zusammen mit den Bändern um einen vertikalen Tablarabstand nach oben versetzt. Dieser Zustand ist in Fig. 3c gezeigt. Dadurch kommen jetzt das zweite, vierte und sechste Tablar von unten in die für den Austrag geeignete Position.

Fig. 3d zeigt den Austrag der jeweiligen Produktreihen. Damit die Gondel in zwei Schritten geleert.

Mit dieser Anordnung kann eine noch höhere Entladeleistung erreicht werden, weil mit jedem Ausschub drei Produktreihen in Richtung Verpackung ausgeschoben werden.

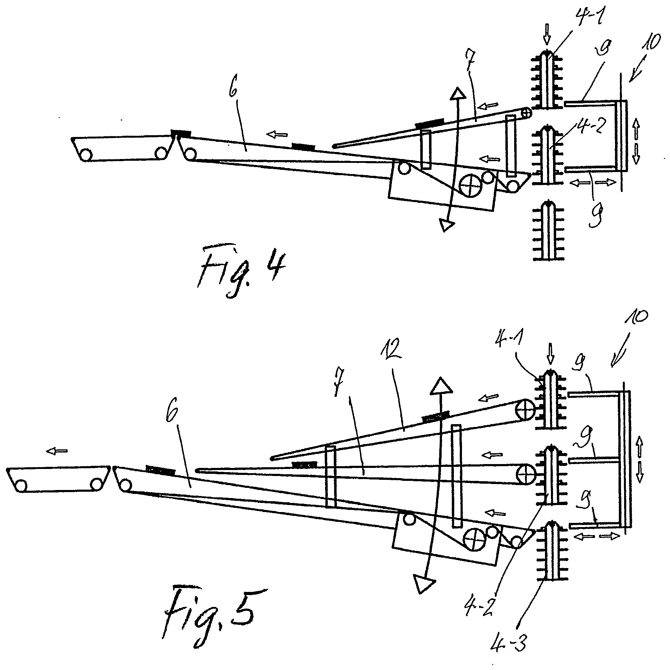

Bei der in Fig. 4 gezeigten Ausführungsform sind die Übernahmekanten der beiden Bänder 6,7 und die Ausschubleisten des Ausschiebers vertikal so weit voneinander beabstandet, dass gleichzeitig Produktreihen von zwei aufeinander folgenden Gondeln 4-1,4-2 ausgetragen werden können. Fig. 5 zeigt eine entsprechend Anordnung mit drei Bändern 6, 7, 12 und drei Ausschubleisten 9, mit der gleichzeitig Produktreihen von drei aufeinander folgenden Gondeln 4-1, 4-2, 4-3 ausgetragen werden können.

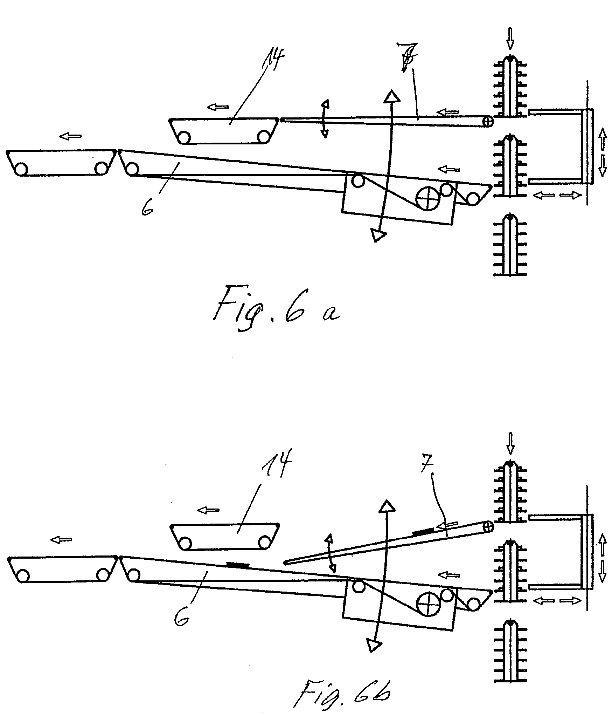

Bei der in Fig. 6a gezeigten Ausführungsform ist ein oberhalb des Hauptbands 6 angeordnetes kürzeres Zusatzband 7 schwenkbar ausgeführt und versorgt in seiner oberen Schwenkposition über ein weiteres fix oberhalb angeordnetes Förderband 14 eine weitere Verpackungslinie mit Produktreihen aus dem Speicherauslauf. Bei einem Stopp dieser Verpackungslinie kann das Band, wie in Fig. 6b gezeigt, nach unten geschwenkt werden, um die Produktreihen in den Fluss des unteren Hauptbands zu übergeben.

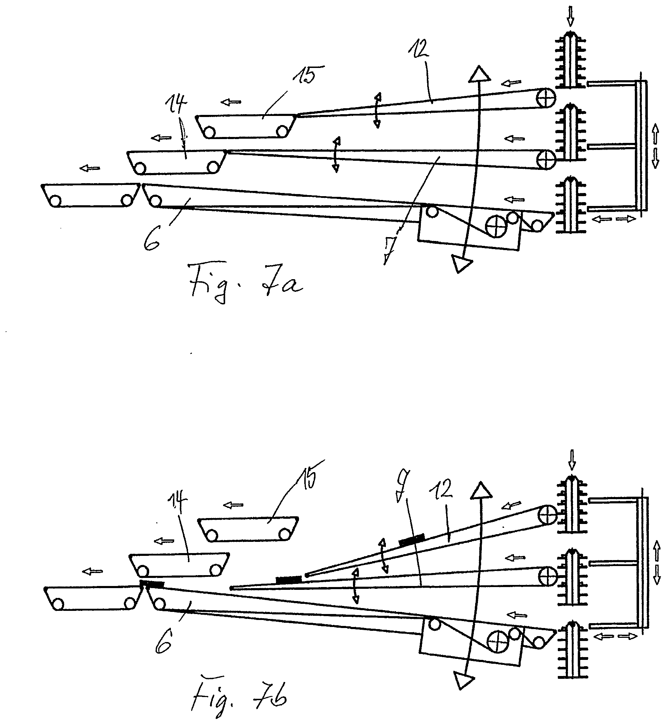

Bei der in Fig. 7a gezeigten Ausführungsform ist ein weiteres Zusatzband 12 oberhalb des ersten Zusatzbands 7 und kürzer als dieses angeordnet, das ebenfalls schwenkbar ausgeführt ist und in seiner oberen Position über ein fix oberhalb angeordnetes Förderband 15 eine weitere Verpackungslinie mit Produktreihen aus dem Speicherauslauf versorgt. Bei einem Stopp dieser weiteren Verpackungslinie kann dieses weitere Zusatzband vertikal nach unten geschwenkt werden, um die Produktreihen in den Fluss des nächsten unterhalb liegenden Bandes 7 zu übergeben, wie in Fig. 7b gezeigt.

Bei allen gezeigten Ausführungsformen ist es möglich, die jeweils oberhalb des schwenkbaren unteren Hauptbands angeordneten kürzeren Förderbänder auf die Produkteträgertablare innerhalb einer Produkteträgergondel, oder auf bestimmte Produkteträgertablare benachbarter Gondeln auszurichten, wie in den Fig. 4 und 5 gezeigt. Die Ausschubleisten des Ausschiebers sind in ihrer vertikalen Lage immer korrespondierend mit dem nachgeschalteten Auslaufförderband. Selbstverständlich kann die Schwenkbewegung der Auslaufförderbänder und die Vertikalbewegung des Ausschiebers anstatt mechanisch gelenkig gekoppelt auch mit jeweils getrennten Antrieben mit entsprechend geeigneten Steuermitteln ausgeführt werden.

Ebenfalls selbstverständlich ist es, dass eine geeignete Steuereinheit für die Servoantriebe für die verschiedenen Funktionen vorhanden sein muss. Derartige Steuerungen sind für den einschlägigen Fachmann anhand seiner Fachkenntnisse ohne erfinderisches Zutun zu verwirklichen.

Die erfindungsgemässe Entladevorrichtung kann systematisch die geforderte Leistungserhöhung erbringen, indem der Ausschub der Produktreihen auf mehreren Ebenen simultan erfolgt bei einer gleichzeitigen kontinuierlichen Abwärtsbewegung der Produkteträgergondeln, d.h. ohne "stop and go".

## Patentansprüche

1. Entladevorrichtung zum Entladen von Produkten, die sich auf Produkteträgertablaren (5) befinden, die ihrerseits in Produkteträgergondeln (4) eines Kettenspeichers angeordnet sind, auf Auslaufförderbänder (6, 7, 12), umfassend mindestens zwei übereinander angeordnete vertikal schwenkbare Auslaufförderbänder (6, 7, 12)
wobei die mindestens zwei Auslaufförderbänder mit einem vertikal beweglichen Ausschieber (10) mechanisch gelenkig gekoppelt sind oder wobei die Schwenkbewegung der Auslaufförderbänder und die Vertikalbewegung des Ausschiebers mit jeweils getrennten Antrieben mit entsprechend geeigneten Steuermitteln ausgeführt werden,
wobei der Ausschieber mit der gleichen Anzahl Ausschubleisten (9) bestückt ist wie Auslaufförderbänder übereinander nachgeschaltet sind,
**dadurch gekennzeichnet, dass** die mindestens zwei Auslaufförderbänder mit unterschiedlich synchronisierten Geschwindigkeiten laufen derart, dass auf einer Hauptförderebene ein regelmässiger lückenloser Produktfluss entsteht.

2. Entladevorrichtung nach Anspruch 1, **dadurch gekennzeichnet, dass** oberhalb liegenden Auslaufförderbänder (7,12) kürzer sind als das unterste Auslaufförderband (6) .

3. Entladevorrichtung nach Anspruch 2, **dadurch gekennzeichnet, dass** ein oberhalb liegendes drittes Auslaufförderband (12) am untersten Auslaufförderband (6) befestigt ist.

4. Entladevorrichtung nach Anspruch 1, **dadurch gekennzeichnet, dass** ein oder mehrere oberhalb liegende kürzere Auslaufförderbänder (7,12) individuell vertikal schwenkbar ausgeführt sind.

5. Entladevorrichtung nach einem der vorangehenden Ansprüche, **dadurch gekennzeichnet, dass** Mittel zum Synchronisieren des Ausschiebers (10) und der Auslaufförderbänder (6,7,12) miteinander und mit der Bewegung der Auslaufförderbänder vorhanden sind, derart, dass ein simultaner Ausschub von Produkten auf den Ebenen der mehreren Auslaufföderbänder erfolgt.

## Claims

1. Unloading device for unloading products located on product carrier trays (5), which are in turn arranged in product carrier gondolas (4) of a chain store, onto discharge conveyor belts (6, 7, 12), the device comprising at least two vertically pivotable discharge conveyor belts (6, 7, 12) arranged above one another,
the at least two discharge conveyor belts being mechanically hinged to a vertically movable pusher (10), or the pivoting movement of the discharge conveyor belts and the vertical movement of the pusher each being carried out by means of separate drives having correspondingly suitable control means, the pusher being provided with the same number of push bars (9) as there are discharge conveyor belts connected downstream above one another,
**characterized in that** the at least two discharge conveyor belts run at differently synchronized speeds in such a way that a regular, uninterrupted product flow is achieved on a main conveying level.

2. Unloading device according to claim 1, **characterized in that** discharge conveyor belts (7, 12) located above are shorter than the lowermost discharge conveyor belt (6).

3. Unloading device according to claim 2, **characterized in that** a third discharge conveyor belt (12) located above is fastened to the lowermost discharge conveyor belt (6).

4. Unloading device according to claim 1, **characterized in that** one or more shorter discharge conveyor belts (7, 12) located above are designed to be individually vertically pivotable.

5. Unloading device according to any of the preceding claims, **characterized in that** means are provided for synchronizing the pusher (10) and the discharge conveyor belts (6,7,12) with one another and with the movement of the discharge conveyor belts such that products are simultaneously ejected onto the levels of the plurality of discharge conveyor belts.

## Revendications

1. Dispositif de déchargement permettant de décharger des produits situés sur des plateaux porte-produits (5), eux-mêmes disposés dans des gondoles porte-produits (4) d'un système de stockage à chaînes, sur des bandes transporteuses de sortie (6, 7, 12), comprenant au moins deux bandes transporteuses de sortie (6, 7, 12) pouvant pivoter verticalement et disposées l'une sur l'autre
dans lequel les au moins deux bandes transporteuses de sortie sont accouplées de manière articulée mécaniquement à un éjecteur (10) mobile verticalement, ou dans lequel le mouvement de pivotement des bandes transporteuses de sortie et le mouvement vertical de l'éjecteur sont réalisés avec respectivement des entraînements séparés comportant des moyens de commande appropriés,
dans lequel l'éjecteur est équipé du même nombre de bandes d'expulsion (9) que les bandes transporteuses de sortie sont superposées les unes au-dessus des autres, **caractérisé en ce que** les au moins deux bandes transporteuses de sortie fonctionnent à des vitesses synchronisées différentes de telle manière qu'un flux de produits régulier et ininterrompu est produit sur un niveau de transport principal.

2. Dispositif de déchargement selon la revendication 1, **caractérisé en ce que** les bandes transporteuses de sortie (7, 12) situées au-dessus sont plus courtes que la bande transporteuse de sortie (6) la plus basse.

3. Dispositif de déchargement selon la revendication 2, **caractérisé en ce qu'**une troisième bande transporteuse de sortie (12) située au-dessus est fixée à la bande transporteuse de sortie (6) la plus basse.

4. Dispositif de déchargement selon la revendication 1, **caractérisé en ce qu'**une ou plusieurs bandes transporteuses de sortie (7, 12) plus courtes situées au-dessus sont conçues de manière à pouvoir pivoter verticalement individuellement.

5. Dispositif de déchargement selon l'une des revendications précédentes, **caractérisé en ce que** des moyens permettant de synchroniser l'éjecteur (10) et les bandes transporteuses de sortie (6, 7, 12) les unes avec les autres et avec le mouvement des bandes transporteuses de sortie sont prévus, de sorte qu'une éjection simultanée de produits sur les niveaux des plusieurs bandes transporteuses de sortie est effectuée.
